# EUROPÄISCHE PATENTSCHRIFT

(11) **EP 3 009 035 B1**
(45) Veröffentlichungstag und Bekanntmachung des Hinweises auf die Patenterteilung: **25.12.2019**
(21) Anmeldenummer: 15174011.5
(22) Anmeldetag: 26.06.2015
(51) Int. Cl.: A47B 13/06, F16B 7/04, F16B 12/30, F16B 12/40

(54) **KNOTENVERBINDUNG FÜR VERBINDUNGSHOLME UND ZUGEHÖRIGES MODULAR AUFGEBAUTES TISCHGESTELL**
NODE CONNECTOR FOR CONNECTING BEAMS AND MODULAR TABLE FRAME WITH SUCH A CONNECTOR
RACCORD DE TYPE NOEUD POUR BARRES DE CONNEXION ET PIETEMENT DE TABLE MODULAIRE ASSOCIE

(30) Priorität: 13.10.2014 DE 202014104866 U
(43) Veröffentlichungstag der Anmeldung: 20.04.2016
(73) Patentinhaber: Oelschläger Metalltechnik GmbH, 27318 Hoya/Weser (DE)
(72) Erfinder:
(74) Vertreter: Manasse, Uwe

(56) Entgegenhaltungen:
- EP-A2- 1 985 872
- DE-U1-202006 006 793
- US-A- 5 785 447
- US-A1- 2006 038 094
- US-A1- 2013 319 296

## Beschreibung

Die vorliegende Erfindung betrifft eine Knotenverbindung zwischen zwei rechtwinklig aufeinanderstoßenden, insbesondere flachprofiligen Verbindungsholmen, mit einer Verbindungsklammer, die aus einem ersten Teil und einem zweiten Teil besteht, sowie ein modular aufgebautes Tischgestell mit derselben. Die Verbindungsklammer kann zum Beispiel aus Stahl, Zink, Aluminium, Messing etc. bestehen.

Aus dem deutschen Gebrauchsmuster DE 298 09 994 U1 ist bereits eine Knotenverbindung der eingangs genannten Art sowie ein modular aufgebautes Tischgestell mit einer derartigen Knotenverbindung bekannt.

Weiterhin offenbart US 2006/0038094 A1 eine zweiteilige Verbindungsklammer, bei der ein Verbindungsholm kraftschlüssig auf Stoß mit einem anderen Verbindungsholm verbunden wird. Dazu werden Schraubverbindungen benutzt.

US 5,785,447 offenbart eine Verbindungsklammer zum kraft- und formschlüssigen Verbinden von Verbindungsholmen miteinander, wobei mehrere Teile der Verbindungsklammer miteinander verschraubt sind.

US 2013/0319296 A1 und EP 1 985 872 A2 offenbaren eine Verbindungsklammer, bei der ein Verbindungsholm kraft- und formschlüssig mittels einer zwei- oder mehrteiligen Klammer an einem auf Stoß angeordneten zweiten Verbindungsholm befestigt werden kann, wobei die verschiedenen Teile der Klammer über Schrauben miteinander verbunden werden.

DE 20 2006 006 793 U1 offenbart eine zweiteilige Verbindungsklammer, mittels der drei oder mehr auf Stoß angeordnete Verbindungsholme kraft- und formschlüssig miteinander verbunden werden. Die bekannte Knotenverbindung könnte in gewissen Fällen, wie zum Beispiel bei flachprofiligen Querholmen, zum Beispiel Querholmen mit einem rechteckigen Profil, das hochkant angeordnet ist, stabiler sein.

Der vorliegenden Erfindung liegt somit die Aufgabe zugrunde, eine stabilere Knotenverbindung, insbesondere für flachprofilige Querholme, bereitzustellen.

Erfindungsgemäß wird diese Aufgabe gelöst durch eine Knotenverbindung nach Anspruch 1.

Bei der Knotenverbindung stoßen die Verbindungsholme rechtwinklig direkt aufeinander. Insbesondere ist das erste Teil der Verbindungsklammer mit dem auf Stoß angeordneten Verbindungsholm alleine kraftschlüssig verbunden.

Auch wenn hier auf "rechtwinklig aufeinanderstoßende" Verbindungsholme abgestellt wird, sollte für den Fachmann ersichtlich sein, dass die Verbindungsholme nicht unbedingt exakt rechtwinklig aufeinanderstoßen müssen. Bei dem auf Stoß angeordneten Verbindungsprofil kann es sich um einen Längsholm handeln, während der andere Verbindungsholm dann ein Querholm ist. Die beiden Verbindungsholme müssen auch nicht unbedingt dieselbe Profilform und dieselben Profilabmessungen aufweisen. Die Profilform kann zum Beispiel rechteckig sein.

Gemäß einer besonderen Ausführungsform umfassen das erste Teil und das zweite Teil der Verbindungsklammer, vorzugsweise nur, den von dem auf Stoß angeordneten Verbindungsholm verschiedenen Verbindungsholm formschlüssig.

Gemäß einer weiteren besonderen Ausführungsform der vorliegenden Erfindung weist die formschlüssige Verbindung zwischen dem ersten Teil und dem zweiten Teil der Verbindungsklammer mindestens ein als eine Rastnase ausgeführtes Verbindungselement und ein als eine zugehörige Rastbohrung ausgeführtes Verbindungselement auf.

Insbesondere kann dabei vorgesehen sein, dass die mindestens eine Rastnase am ersten Teil der Verbindungsklammer angeordnet ist und die mindestens eine Rastbohrung im zweiten Teil der Verbindungsklammer angeordnet ist.

Günstiger Weise sind das erste Teil und das zweite Teil zusätzlich kraftschlüssig miteinander verbunden.

Insbesondere kann dabei vorgesehen sein, dass das erste Teil und das zweite Teil miteinander verschraubt sind.

Gemäß einer weiteren besonderen Ausführungsform der vorliegenden Erfindung weist der von dem auf Stoß angeordneten Verbindungsholm verschiedene Verbindungsholm der beiden Verbindungsholme in einer dem ersten Teil der Verbindungsklammer gegenüberliegenden Seite mindestens eine Durchgangsbohrung und in einer dem zweiten Teil der Verbindungsklammer gegenüberliegenden Seite eine mit der mindestens einen Durchgangsbohrung fluchtende Durchgangsbohrung auf, das zweite Teil der Verbindungsklammer eine Senkbohrung zum Ein- bzw. Durchstecken einer Schraube und das erste Teil der Verbindungsklammer eine Gewindebohrung für die Schraube zur Verschraubung auf.

Insbesondere kann dabei vorgesehen sein, dass die Senkbohrung im zweiten Teil der Verbindungsklammer in einem Schraubdom angeordnet ist, der in der Durchgangsbohrung auf der dem ersten Teil der Verbindungsklammer gegenüberliegenden Seite in dem von dem auf Stoß angeordneten Verbindungsholm verschiedenen Verbindungsholm steckt. Der Schraubendom kann dabei in der Durchgangsbohrung mit oder ohne Spiel stecken.

Ebenfalls kann es vorteilhaft sein, wenn die Gewindebohrung im ersten Teil der Verbindungsklammer in einem Schraubdom angeordnet ist, der in der Durchgangsbohrung auf der dem zweiten Teil der Verbindungsklammer gegenüberliegenden Seite in dem von dem auf Stoß angeordneten Verbindungsholm verschiedenen Verbindungsholm steckt. Der Schraubendom kann dabei in der Durchgangsbohrung mit oder ohne Spiel stecken.

Vorteilhafterweise ist der Schraubdom des ersten Teils der Verbindungsklammer über mindestens eine Versteifungsrippe, die sich durch eine korrespondierende Freimachung in dem von dem auf Stoß angeordneten Verbindungsholm verschiedenen Verbindungsholm erstreckt, abgestützt und mit der Innenseite der Seitenwand des ersten Teils verbunden.

Insbesondere können dabei die beiden Schraubdome aneinandergrenzen oder ineinanderstecken.

Vorteilhafterweise weist das zweite Teil der Verbindungsklammer mindestens eine Rastnase und der auf Stoß angeordnete Verbindungsholm mindestens eine korrespondierende Rastbohrung für die Rastnase zur formschlüssigen Verbindung auf.

Gemäß einer weiteren besonderen Ausführungsform der vorliegenden Erfindung ist das erste Teil der Verbindungsklammer ein Oberteil und das zweite Teil der Verbindungsklammer ein Unterteil. Es kann jedoch auch der umgekehrte Fall vorliegen.

Gemäß einer weiteren besonderen Ausführungsform ist der auf Stoß angeordnete Verbindungsholm im Profil höher als der von dem auf Stoß angeordneten Verbindungsholm verschiedene Verbindungsholm.

Schließlich liefert die vorliegende Erfindung ein modular aufgebautes Tischgestell, umfassend mindestens zwei Verbindungsholme, die mittels einer Knotenverbindung nach einem der Ansprüche 1 bis 17 verbunden sind.

Der Erfindung liegt die überraschende Kenntnis zugrunde, dass durch die Kombination einer kraftschlüssigen Verbindung zwischen dem ersten Teil der Verbindungsklammer und dem auf Stoß angeordneten Verbindungsholm und einer formschlüssigen Verbindung zwischen dem ersten Teil der Verbindungsklammer und dem zweiten Teil der Verbindungsklammer eine besonders stabile Knotenverbindung auch bei einem flachprofiligen Querholm erzielt werden kann.

Weitere Merkmale und Vorteile der Erfindung ergeben sich aus den beigefügten Ansprüchen und der nachfolgenden Beschreibung, in der ein Ausführungsbeispiel anhand der schematischen Zeichnungen im Einzelnen erläutert wird. Dabei zeigt:
- Figur 1: eine perspektivische Ansicht von einem modular aufgebauten Tischgestell gemäß einer besonderen Ausführungsform der vorliegenden Erfindung mit darauf angebrachter Tischplatte schräg von unten;
- Figur 2: eine Draufsicht auf eine Knotenverbindung schräg von oben des Tischgestells von Figur 1, wobei die Tischplatte weggelassen ist;
- Figur 3: eine Explosionsansicht von Figur 2, wobei die Komponenten um 90° im Uhrzeigersinn gedreht sind;
- Figur 4: die Verbindungsklammer der in den Figuren 2 und 3 gezeigten Knotenverbindung;
- Figur 5: eine perspektivische Ansicht von einer Knotenverbindung des Tischgestells von Figur 1 schräg von unten;
- Figur 6: die Knotenverbindung von Figur 5 in Explosionsansicht;
- Figur 7: die Verbindungsklammer der Knotenverbindung von Figur 5;
- Figur 8: die Verbindungsklammer von Figur 7 in etwas abweichender perspektivischer Ansicht;
- Figur 9: die Verbindungsklammer von Figur 8 in Explosionsansicht;
- Figur 10: die Verbindungsklammer von Figur 8 in rückwärtiger Explosionsansicht; und
- Figur 11: das Tischgestell von Figur 1 während der Montage mit zum Beispiel auf den Boden umgedreht abgelegter Tischplatte.

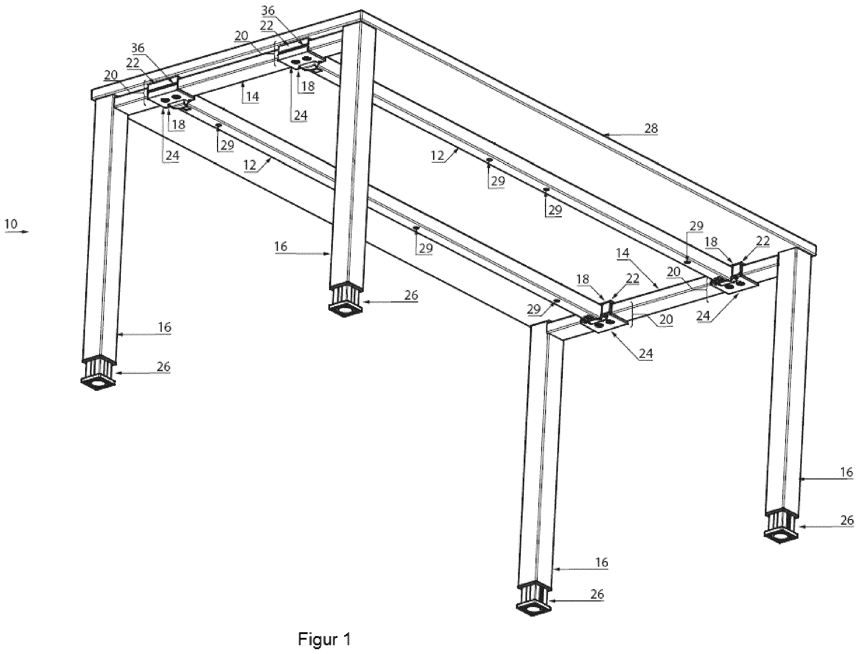

Das in Figur 1 dargestellte Tischgestell 10 weist im vorliegenden Beispiel vier Verbindungsholme, nämlich zwei Längsholme 12 und zwei Querholme 14, und 4 Standbeine 16 auf. Die Längsholme 12 stoßen stumpf auf die Seiten der Querholme 14, wobei zwischen ihnen eine jeweilige Knotenverbindung 18 besteht. Besagte Knotenverbindung 18 umfasst eine Verbindungsklammer 20, die aus einem ersten Teil in Form eines Oberteils 22 und einem zweiten Teil in Form eines Unterteils 24 besteht.

Die Standbeine 16 weisen in diesem Beispiel ein quadratisches Profil auf, sind an den Enden der Querholme 14 befestigt und weisen zur Höhenverstellung unten höhenverstellbare Füße 26 auf. Selbstverständlich könnten die Standbeine aber auch zum Beispiel ein rundes Profil aufweisen. Eine Tischplatte 28 ist oben aufgelegt und befestigt. Die Befestigung kann beispielsweise mittels selbstschneidender Schrauben (nicht gezeigt) durch Bohrungen 29 in den Längsholmen 14 erfolgen. Selbstverständlich kann das Tischgestell 10 in einer anderen Ausführungsform eine andere Anzahl von Standbeinen 16 und/oder eine andere Anzahl von Längsholmen 12 und Querholmen 14 aufweisen und können die Längsholme 12 und Querholme 14 andere Längen aufweisen sowie zu den verschiedensten Tischgestell-Konfigurationen zusammengesetzt sein bzw. werden.

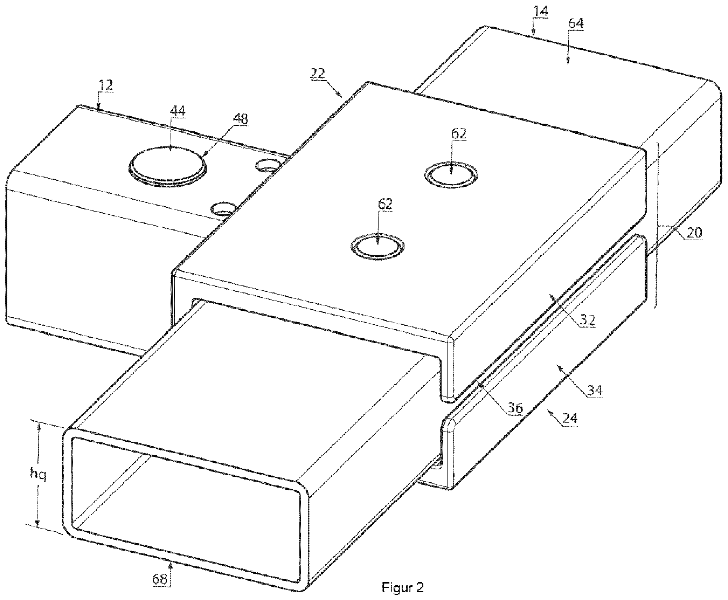

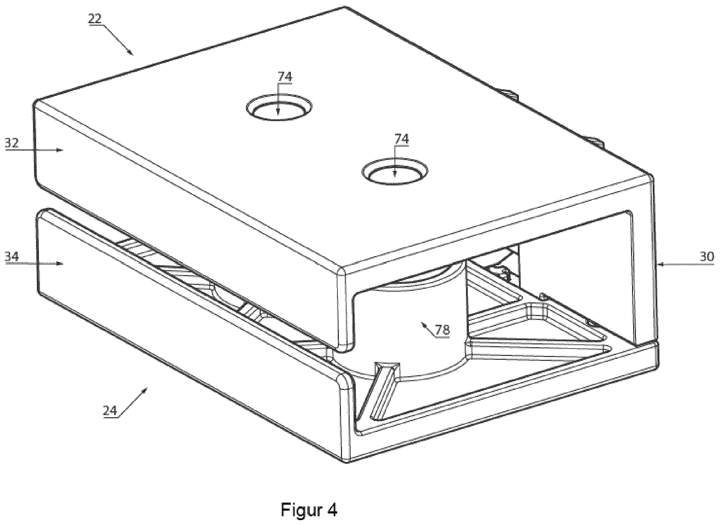

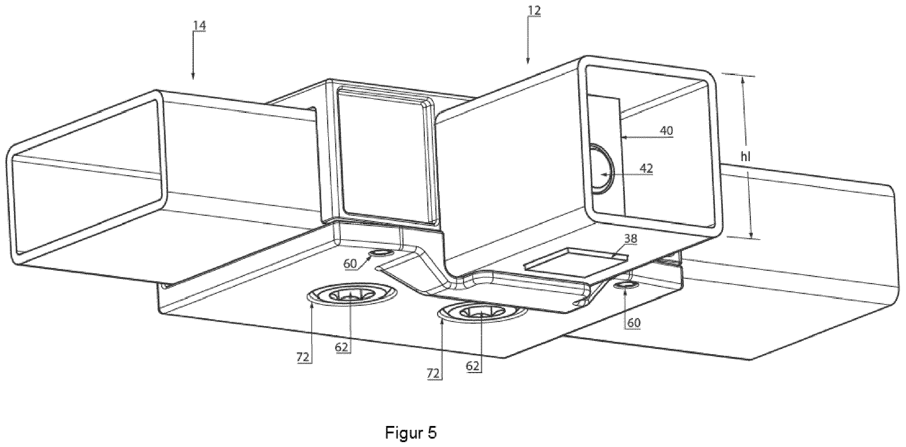

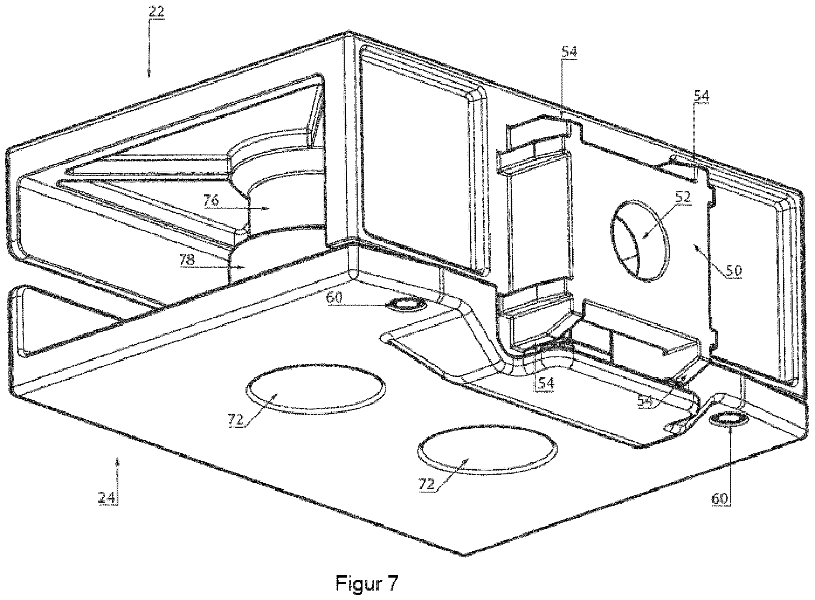

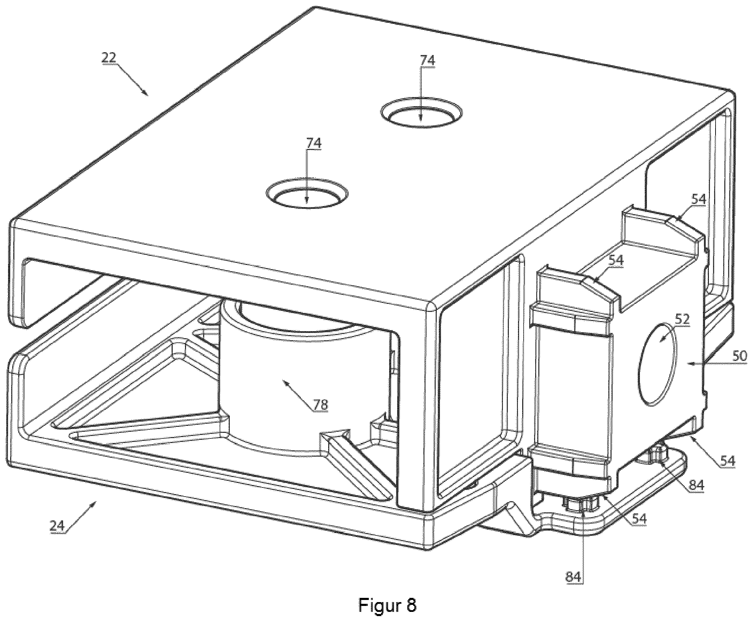

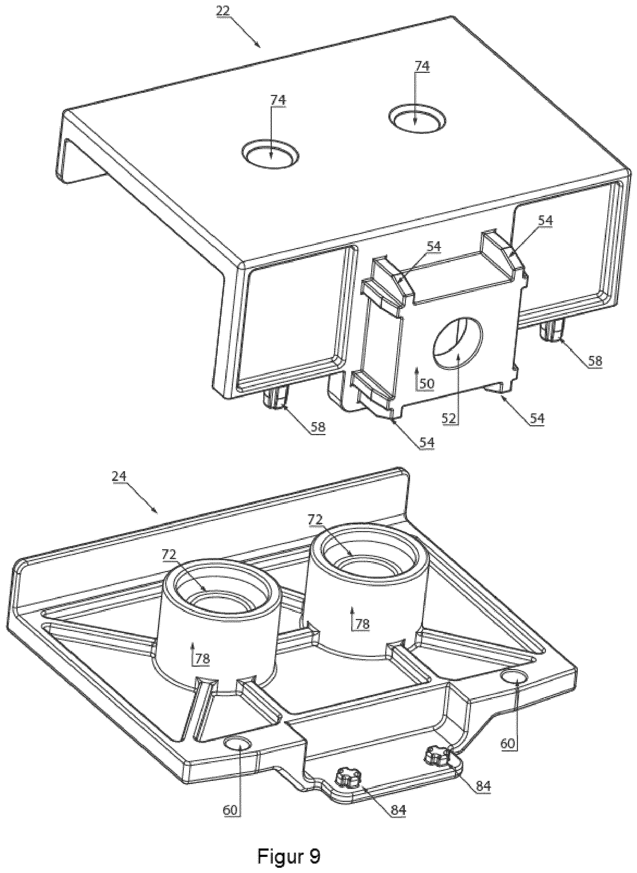

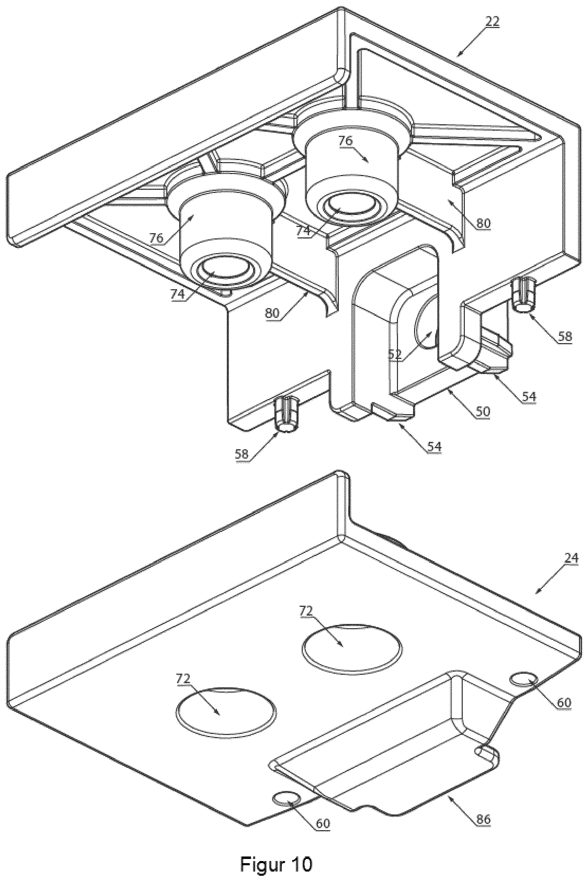

Anhand der Figuren 2 bis 10 soll nun eine Knotenverbindung 18 zwischen einem Längsholm 12 und einem Querholm 14 sowie der Aufbau der Verbindungsklammer 20 erläutert werden. Wie dargestellt ist, weist der Längsholm 12 ein im Wesentlichen quadratisches Profil auf, während der Querholm 14 ein rechteckiges Profil aufweist, das horizontal angeordnet ist. Mit anderen Worten erstreckt sich die lange Seite des Rechtecks in horizontaler Richtung. Die Höhe h₁ des Längsholms 12 ist größer als die Höhe h_{q} des Querholms 14 (siehe zum Beispiel Figuren 2 und 5). Wie sich zum Beispiel anhand der Figuren 1 bis 3 ergibt, ist das Oberteil 22 in Seitenansicht im Wesentlichen U-förmig gestaltet, während das Unterteil 24 in Seitenansicht im Wesentlichen L-förmig gestaltet ist. Das U-förmige Oberteil 22 weist zwei unterschiedlich lange Schenkel 30 und 32 auf. Während der längere Schenkel 30 im Prinzip so lang wie der Querholm 14 hoch ist, ist der kürzere Schenkel 32 nicht einmal halb so lang. Der kurze Schenkel 34 des L-förmigen Unterteils 24 weist dieselbe Länge wie der Schenkel 32 auf. Wie sich insbesondere in Verbindung mit der Figur 1 ergibt, liegen sich die kurzen Schenkel 32 und 34 jeweils auf der Außenseite des Tischgestells gegenüber und bilden einen horizontalen Längsspalt 36 dazwischen. Die Höhe des Längsspalts kann zum Beispiel so gewählt werden, dass sich das Oberteil und das Unterteil gerade nicht berühren, kann aber auch größer gewählt werden, zum Beispiel aus optischen Gründen. Zudem ergibt sich insbesondere aus den Figuren 2 und 5, dass das Oberteil 22 und das Unterteil 24 im Prinzip nur den Querholm 14 formschlüssig umfassen.

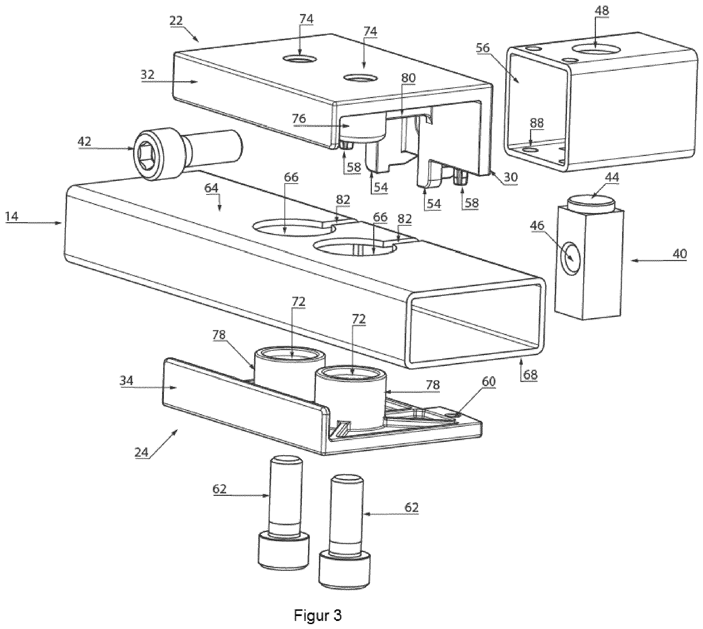

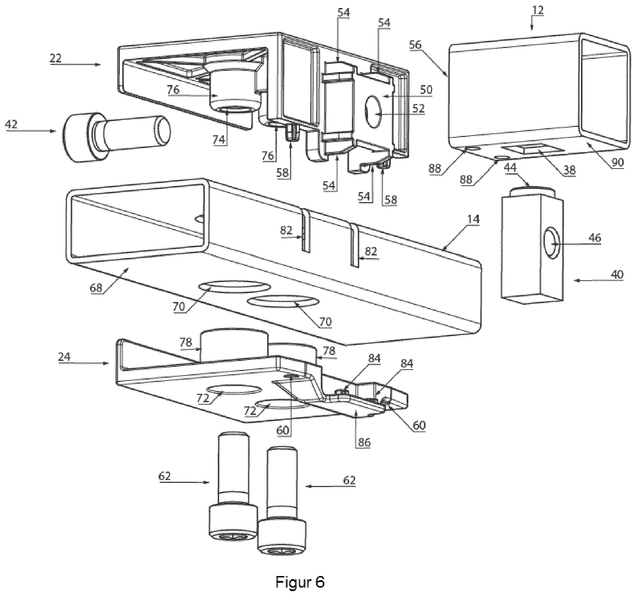

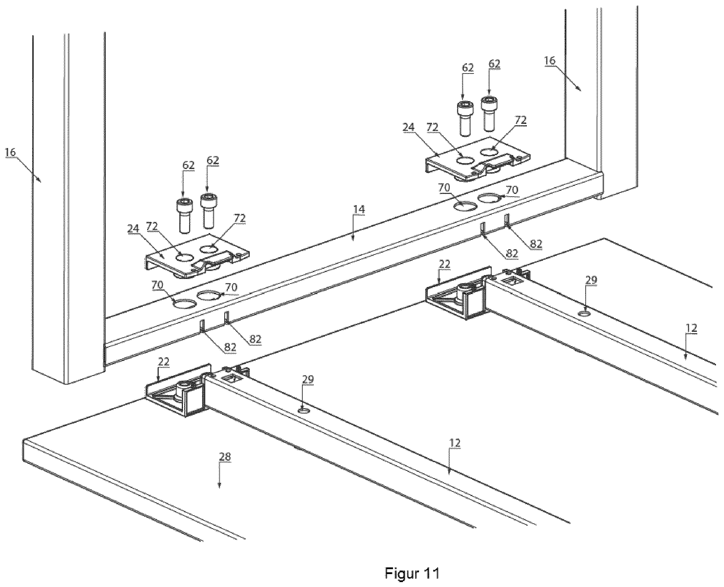

Wie sich auch aus der Figur 11 ergibt, wird bei der Montage zunächst das Oberteil 22 mit dem Längsholm 12 kraftschlüssig verbunden. Dazu dienen ein von der Unterseite durch eine Durchgangsbohrung 38 (siehe Figur 6) in dem Längsholm 12 in der Nähe des zum Querholm 14 gelegenen Endes einsetzbares Gewindestück 40 sowie eine Schraube 42 (siehe zum Beispiel Figur 3) . Das Gewindestück 40 ist stabförmig mit einem quadratischen Querschnitt und einem oberen kreisförmigen Ansatz 44 sowie einer sich quer zur Längserstreckung des Gewindestückes 40 erstreckenden durchgehenden Gewindebohrung 46 versehen. Der Ansatz 44 wird in einer Durchgangsbohrung 48 gegenüber der Durchgangsbohrung 38 in dem Längsholm 12 gehalten. Da zudem die Durchgangsbohrung 38 eine zu dem Querschnitt des Gewindestückes 40 korrespondierende Gestalt aufweist, ist das Gewindestück 40 im eingesetzten Zustand drehfest.

Das Oberteil 22 weist auf der Außenseite des langen Schenkels 30 einen Ansatz 50 (siehe Figur 6) mit einer mittigen Durchgangsbohrung 52 zum Ein- und Durchstecken der Schraube 42 und Festziehen derselben in der Gewindebohrung 46 des Gewindestückes 40 auf. Der Ansatz 50 ist zudem hinsichtlich seiner Außenkontur so gestaltet, dass er - wenn auch nicht vollflächig - über geeignete Rippen 54 an den Ecken in dem Stirnende 56 des Längsholms 12 formschlüssig steckt.

Nach Herstellung der kraftschlüssigen Verbindung zwischen dem Oberteil 22 und dem Längsholm 12 wird der Querholm 14 in den "Kanal" des Oberteils 22 eingelegt und wird danach das Unterteil 24 - den Querholm 14 an zwei Seiten umfassend - mit dem Oberteil 22 formschlüssig verbunden (siehe auch Figur 11). Für den Formschluss weist das Oberteil 22 am unteren Ende des längeren Schenkels 30 zwei seitliche Rastnasen 58 auf, die in zwei korrespondierende Rastbohrungen 60 am Rand des langen Schenkels des Unterteils 24 einrasten bzw. eingerastet sind.

Das Oberteil 22 ist mit dem Unterteil 24 zusätzlich kraftschlüssig verbunden. Genauer gesagt sind in diesem Beispiel das Oberteil 22 und das Unterteil 24 mittels zweier Schrauben 62 miteinander verschraubt. Dazu weist der Querholm 14 in einer dem Oberteil 22 der Verbindungsklammer 20 gegenüberliegenden Seite 64 zwei in Längsrichtung des Querholms 14 beanstandete Durchgangsbohrungen 66 und in einer dem Unterteil 24 der Verbindungsklammer 20 gegenüberliegenden Seite 68 zwei mit den beiden Durchgangsbohrungen 66 fluchtende Durchgangsbohrungen 70 auf, weist das Unterteil 24 der Verbindungsklammer 20 eine Senkbohrung 72 zum Ein- bzw. Durchstecken der Schrauben 62 auf und weist das Oberteil 22 der Verbindungsklammer 20 zwei korrespondierende Gewindebohrungen 74 für die Schrauben 62 zur Verschraubung auf. Die Senkbohrungen 72 sind im Unterteil 24 der Verbindungsklammer 20 in einem jeweiligen Schraudom 78 angeordnet, der in der Durchgangsbohrung 70 auf der dem Unterteil 24 der Verbindungsklammer 20 gegenüberliegenden Seite 68 in dem Querholm 14 steckt. Die Gewindebohrungen 74 im Oberteil 22 der Verbindungsklammer 20 sind in jeweiligen zugehörigen Schraubdomen 76 angeordnet, die in den Durchgangsbohrungen 66 auf der dem Oberteil 22 der Verbindungsklammer 20 gegenüberliegenden Seite 64 in dem Querholm 14 stecken.

Im vorliegenden Beispiel stecken die Schraubdome 76 und 78 ineinander.

Die Schraubdome 76 des Oberteils 22 der Verbindungsklammer 20 sind über eine jeweilige Versteifungsrippe 80, die sich durch eine jeweilige korrespondierende Freimachung 82 in dem Querholm 14 erstrecken, abgestützt und mit der Innenseite der Seitenwand des Oberteils 22 verbunden. Die Freimachungen 82 gehen dazu in die Durchgangsbohrung 66 über.

Darüber hinaus besteht eine formschlüssige Verbindung zwischen dem Unterteil 24 der Verbindungsklammer 20 und dem Längsholm 12. Die formschlüssige Verbindung ergibt sich über zwei in Längsrichtung des Querholms 14 zueinander beanstandete Rastnasen 84 in einer Erhebung 86 im Unterteil 24 der Verbindungsklammer 20 und zwei korrespondierende Rastbohrungen 88 in der Oberseite 90 des Längsholms 12.

## Patentansprüche

1. Knotenverbindung (18) mit zwei rechtwinklig aufeinanderstoßenden, insbesondere flachprofiligen, Verbindungsholmen (12, 14), umfassend eine Verbindungsklammer (20), die aus einem ersten Teil und einem zweiten Teil besteht, wobei das erste Teil der Verbindungsklammer mit dem auf Stoß angeordneten Verbindungsholm der beiden Verbindungsholme kraftschlüssig und mit dem zweiten Teil der Verbindungsklammer formschlüssig verbunden ist, wobei die kraftschlüssige Verbindung zwischen dem ersten Teil und dem auf Stoß angeordneten Verbindungsholm ein als eine Schraube (42) ausgeführtes Verbindungselement und ein als ein zugehöriges, in besagten Verbindungsholm lösbar einsetzbares Gewindestück (40) ausgeführtes Verbindungselement aufweist, **dadurch gekennzeichnet, dass** das erste Teil der Verbindungsklammer (20) einen Ansatz (50) aufweist, der in dem Stirnende (56) des auf Stoß angeordneten Verbindungsholms formschlüssig steckt.

2. Knotenverbindung (18) nach Anspruch 1, **dadurch gekennzeichnet, dass** das erste Teil und das zweite Teil der Verbindungsklammer (20), vorzugsweise nur, den von dem auf Stoß angeordneten Verbindungsholm verschiedenen Verbindungsholm formschlüssig umfassen.

3. Knotenverbindung (18) nach Anspruch 1, **dadurch gekennzeichnet, dass** der Ansatz (50) eine Durchgangsbohrung (52) für die Schraube (42) aufweist.

4. Knotenverbindung (18) nach einem der vorangehenden Ansprüche, **dadurch gekennzeichnet, dass** die formschlüssige Verbindung zwischen dem ersten Teil und dem zweiten Teil der Verbindungsklammer mindestens ein als eine Rastnase (58) ausgeführtes Verbindungselement und ein als eine zugehörige Rastbohrung (60) ausgeführtes Verbindungselement aufweist.

5. Knotenverbindung (18) nach Anspruch 4, **dadurch gekennzeichnet, dass** die mindestens eine Rastnase (58) am ersten Teil der Verbindungsklammer (20) angeordnet ist und die mindestens eine Rastbohrung (60) im zweiten Teil der Verbindungsklammer angeordnet ist.

6. Knotenverbindung (18) nach einem der vorangehenden Ansprüche, **dadurch gekennzeichnet, dass** das erste Teil und das zweite Teil zusätzlich kraftschlüssig miteinander verbunden sind.

7. Knotenverbindung (18) nach Anspruch 6, **dadurch gekennzeichnet, dass** das erste Teil und das zweite Teil miteinander verschraubt sind.

8. Knotenverbindung (18) nach Anspruch 7, **dadurch gekennzeichnet, dass** der von dem auf Stoß angeordneten Verbindungsholm verschiedene Verbindungsholm der beiden Verbindungsholme in einer dem ersten Teil der Verbindungsklammer (20) gegenüberliegenden Seite mindestens eine Durchgangsbohrung (66) und in einer dem zweiten Teil der Verbindungsklammer (20) gegenüberliegenden Seite eine mit der mindestens einen Durchgangsbohrung (66) fluchtende Durchgangsbohrung (70) aufweist, das zweite Teil der Verbindungsklammer (20) eine Senkbohrung (72) zum Ein- bzw. Durchstecken einer Schraube (62) und das erste Teil der Verbindungsklammer eine Gewindebohrung (74) für die Schraube (62) zur Verschraubung aufweist.

9. Knotenverbindung (18) nach Anspruch 8, **dadurch gekennzeichnet, dass** die Senkbohrung (72) im zweiten Teil der Verbindungsklammer (20) in einem Schraubdom (78) angeordnet ist, der in der Durchgangsbohrung (70) auf der dem ersten Teil der Verbindungsklammer (20) gegenüberliegenden Seite in dem von dem auf Stoß angeordneten Verbindungsholm verschiedenen Verbindungsholm steckt.

10. Knotenverbindung (18) nach Anspruch 8 oder 9, **dadurch gekennzeichnet, dass** die Gewindebohrung (76) im ersten Teil der Verbindungsklammer (20) in einem Schraubdom (76) angeordnet ist, der in der Durchgangsbohrung (66) auf der dem zweiten Teil der Verbindungsklammer (20) gegenüberliegenden Seite in dem von dem auf Stoß angeordneten Verbindungsholm verschiedenen Verbindungsholm steckt.

11. Knotenverbindung (18) nach Anspruch 10, **dadurch gekennzeichnet, dass** der Schraubdom (78) des ersten Teils der Verbindungsklammer (20) über mindestens eine Versteifungsrippe, die sich durch eine korrespondierende Freimachung (82) in dem von dem auf Stoß angeordneten Verbindungsholm verschiedenen Verbindungsholm erstreckt, abgestützt und mit der Innenseite der Seitenwand des ersten Teils verbunden ist.

12. Knotenverbindung (18) nach Anspruch 11, **dadurch gekennzeichnet, dass** die beiden Schraubdome (76, 78) aneinandergrenzen oder ineinanderstecken.

13. Knotenverbindung (18) nach einem der vorangehenden Ansprüche, **dadurch gekennzeichnet, dass** das zweite Teil der Verbindungsklammer (20) mindestens eine Rastnase (84) und der auf Stoß angeordnete Verbindungsholm mindestens eine korrespondierende Rastbohrung (88) für die Rastnase (84) zur formschlüssigen Verbindung aufweist.

14. Knotenverbindung (18) nach einem der vorangehenden Ansprüche, **dadurch gekennzeichnet, dass** das erste Teil der Verbindungsklammer ein Oberteil (22) und das zweite Teil der Verbindungsklammer ein Unterteil (24) ist.

15. Knotenverbindung (18) nach einem der vorangehenden Ansprüche, **dadurch gekennzeichnet, dass** der auf Stoß angeordnete Verbindungsholm im Profil höher als der von dem auf Stoß angeordneten Verbindungsholm verschiedenen Verbindungsholm ist.

16. Modular aufgebautes Tischgestell (10), umfassend mindestens eine Knotenverbindung (18) nach einem der vorangehenden Ansprüche.

## Claims

1. Node connection (18) with two connecting beams (12, 14) which butt against one another at a right angle, and in particular have a flat profile, comprising a connecting clip (20) which consists of a first part and a second part, wherein the first part of the connecting clip is connected in a force-fitting manner to the abutting connecting beam of the two connecting beams and is connected in an interlocking manner to the second part of the connecting clip, wherein the force-fitting connection between the first part and the abutting connecting beam has one connecting element which is designed as a screw (42) and one connecting element which is designed as an associated threaded piece (40) which can be inserted in a releasable manner into the said connecting beam, **characterized in that** the first part of the connecting clip (20) has an attachment (50) which plugs in an interlocking manner into the front end (56) of the abutting connecting beam.

2. Node connection (18) according to Claim 1, **characterized in that** the first part and the second part of the connecting clip (20) preferably encompass in an interlocking manner only the connecting beam which is different from the abutting connecting beam.

3. Node connection (18) according to Claim 1, **characterized in that** the attachment (50) has a passage bore (52) for the screw (42).

4. Node connection (18) according to one of the preceding claims, **characterized in that** the interlocking connection between the first part and the second part of the connecting clip has at least one connecting element which is designed as a latching lug (58) and one connecting element which is designed as an associated latching bore (60).

5. Node connection (18) according to Claim 4, **characterized in that** the at least one latching lug (58) is arranged on the first part of the connecting clip (20) and the at least one latching bore (60) is arranged in the second part of the connecting clip.

6. Node connection (18) according to one of the preceding claims, **characterized in that** the first part and the second part are additionally connected to one another in a force-fitting manner.

7. Node connection (18) according to Claim 6, **characterized in that** the first part and the second part are screwed to one another.

8. Node connection (18) according to Claim 7, **characterized in that** the connecting beam of the two connecting beams that is different from the abutting connecting beam has at least one passage bore (66) in a side which is opposite the first part of the connecting clip (20) and has a passage bore (70), which is in alignment with the at least one passage bore (66), in a side which is opposite the second part of the connecting clip (20), the second part of the connecting clip (20) has a recessed bore (72) for inserting or passing through a screw (62) and the first part of the connecting clip has a threaded bore (74) for the screw (62) for screw-connection purposes.

9. Node connection (18) according to Claim 8, **characterized in that** the recessed bore (72) in the second part of the connecting clip (20) is arranged in a screw dome (78) which plugs into the passage bore (70) on the side opposite the first part of the connecting clip (20) in the connecting beam which is different from the abutting connecting beam.

10. Node connection (18) according to Claim 8 or 9, **characterized in that** the threaded bore (76) in the first part of the connecting clip (20) is arranged in a screw dome (76) which plugs into the passage bore (66) on the side opposite the second part of the connecting clip (20) in the connecting beam which is different from the abutting connecting beam.

11. Node connection (18) according to Claim 10, **characterized in that** the screw dome (78) of the first part of the connecting clip (20) is supported by means of at least one reinforcing rib, which extends through a corresponding clearance (82) in the connecting beam which is different from the abutting connecting beam, and is connected to the inner side of the side wall of the first part.

12. Node connection (18) according to Claim 11, **characterized in that** the two screw domes (76, 78) adjoin one another or plug one into the other.

13. Node connection (18) according to one of the preceding claims, **characterized in that** the second part of the connecting clip (20) has at least one latching lug (84) and the abutting connecting beam has at least one corresponding latching bore (88) for the latching lug (84) for interlocking connection.

14. Node connection (18) according to one of the preceding claims, **characterized in that** the first part of the connecting clip is a top part (22) and the second part of the connecting clip is a bottom part (24) .

15. Node connection (18) according to one of the preceding claims, **characterized in that** the abutting connecting beam has a higher profile than the connecting beam which is different from the abutting connecting beam.

16. Table frame (10) of modular construction, comprising at least one node connection (18) according to one of the preceding claims.

## Revendications

1. Raccord de type nœud (18) avec deux barres de connexion (12, 14) aboutées perpendiculairement, notamment à profil plat, comprenant une attache de liaison (20), qui est composée d'une première partie et d'une deuxième partie, sachant que la première partie de l'attache de liaison est reliée par force à la barre de connexion disposée par aboutement des deux barres de connexion et par conformité de forme à la deuxième partie de l'attache de liaison, sachant que la liaison par force entre la première partie et la barre de connexion disposée par aboutement comporte un élément de liaison exécuté sous la forme d'une vis (42) et un élément de liaison exécuté comme une pièce filetée (40) correspondante pouvant être insérée de façon amovible dans ladite barre de connexion, **caractérisée en ce que** la première partie de l'attache de liaison (20) comporte une saillie (50), qui s'emboîte par conformité de forme dans l'extrémité frontale (56) de la barre de connexion disposée par aboutement.

2. Raccord de type nœud (18) selon la revendication 1, **caractérisé en ce que** la première partie et la deuxième partie de l'attache de liaison (20) ne comprennent, par conformité de forme, de préférence que la barre de connexion différente de la barre de connexion disposée par aboutement.

3. Raccord de type nœud (18) selon la revendication 1, **caractérisé en ce que** la saillie (50) comporte un trou de passage (52) pour la vis (42).

4. Raccord de type nœud (18) selon l'une quelconque des revendications précédentes, **caractérisé en ce que** l'assemblage par conformité de forme entre la première partie et la deuxième partie de l'attache de liaison comporte au moins un élément de liaison exécuté comme un ergot d'encliquetage (58) et un élément de liaison exécuté comme un trou d'encliquetage (60) correspondant.

5. Raccord de type nœud (18) selon la revendication 4, **caractérisé en ce qu'**au moins un ergot d'encliquetage (58) est disposé sur la première partie de l'attache de liaison (20) et au moins un trou d'encliquetage (60) est disposé dans la deuxième partie de l'attache de liaison.

6. Raccord de type nœud (18) selon l'une quelconque des revendications précédentes, **caractérisé en ce que** la première partie et la deuxième partie sont en plus reliées l'une à l'autre par force.

7. Raccord de type nœud (18) selon la revendication 6, **caractérisé en ce que** la première partie et la deuxième partie sont vissées l'une à l'autre.

8. Raccord de type nœud (18) selon la revendication 7, **caractérisé en ce que** la barre de connexion des deux barres de connexion, différente de la barre de connexion disposée par aboutement comporte dans un côté opposé à la première partie de l'attache de liaison (20) au moins un trou de passage (66) et dans un côté opposé à la deuxième partie de l'attache de liaison (20) un trou de passage (70) aligné avec au moins un trou de passage (66), la deuxième partie de l'attache de liaison (20) comporte un lamage (72) pour introduire ou faire passer une vis (62) et la première partie de l'attache de liaison comporte un trou fileté (74) pour la vis (62) destinée au vissage.

9. Raccord de type nœud (18) selon la revendication 8, **caractérisé en ce que** le lamage (72) est disposé dans la deuxième partie de l'attache de liaison (20) dans un dôme à vis (78), qui s'emboîte dans le trou de passage (70) sur le côté opposé à la première partie de l'attache de liaison (20) dans la barre de connexion différente de la barre de connexion disposée par aboutement.

10. Raccord de type nœud (18) selon la revendication 8 ou 9, **caractérisé en ce que** le trou fileté (76) dans la première partie de l'attache de liaison (20) est disposé dans un dôme à vis (76), qui s'emboîte dans le trou de passage (66) sur le côté opposé à la deuxième partie de l'attache de liaison (20) dans la barre de connexion différente de la barre de connexion disposée par aboutement.

11. Raccord de type nœud (18) selon la revendication 10, **caractérisé en ce que** le dôme à vis (78) de la première partie de l'attache de liaison (20) s'appuie sur au moins une nervure de raidissement, qui s'étend à travers un dégagement (82) correspondant dans la barre de connexion différente de la barre de connexion disposée par aboutement et est relié à la face intérieure de la paroi latérale de la première partie.

12. Raccord de type nœud (18) selon la revendication 11, **caractérisé en ce que** les deux dômes à vis (76, 78) sont contigus ou s'emboîtent l'un dans l'autre.

13. Raccord de type nœud (18) selon l'une quelconque des revendications précédentes, **caractérisé en ce que** la deuxième partie de l'attache de liaison (20) comporte au moins un ergot d'encliquetage (84) et la barre de connexion disposée par aboutement comporte au moins un trou d'encliquetage (88) correspondant pour l'ergot d'encliquetage (84) pour l'assemblage par conformité de forme.

14. Raccord de type nœud (18) selon l'une quelconque des revendications précédentes, **caractérisé en ce que** la première partie de l'attache de liaison est une partie supérieure (22) et la deuxième partie de l'attache de liaison est une partie inférieure (24) .

15. Raccord de type nœud (18) selon l'une quelconque des revendications précédentes, **caractérisé en ce que** la barre de connexion disposée par aboutement est en profil plus élevée que la barre de connexion différente de la barre de connexion disposée par aboutement.

16. Piètement de table à montage modulaire (10) comprenant au moins un raccord de type nœud (18) selon l'une quelconque des revendications précédentes.
